(19) Europäisches Patentamt
European Patent Office
Office européen des brevets

(11) Publication number: 0 068 817
B1

(12) # EUROPEAN PATENT SPECIFICATION

(45) Date of publication of patent specification: **03.10.84**

(51) Int. Cl.$^3$: **C 01 B 33/28**

(21) Application number: **82303290.9**

(22) Date of filing: **24.06.82**

(54) **Manufacture of ZSM-zeolites.**

(30) Priority: **01.07.81 GB 8120329**

(43) Date of publication of application:
**05.01.83 Bulletin 83/01**

(45) Publication of the grant of the patent:
**03.10.84 Bulletin 84/40**

(84) Designated Contracting States:
**AT BE CH DE FR IT LI LU NL SE**

(56) References cited:
**EP-A-0 012 248**
**DE-A-1 542 621**
**DE-A-2 635 357**
**GB-A-1 132 096**
**US-A-3 702 886**

(73) Proprietor: **ENGLISH CLAYS LOVERING POCHIN & COMPANY LIMITED**
**John Keay House**
**St. Austell Cornwall PL25 4DJ (GB)**

(72) Inventor: **Reid, Paul Ian**
**Carpalla Cottage Carpalla Road Foxhole**
**St. Austell Cornwall (GB)**

(74) Representative: **Bull, Michael Alan et al**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with the manufacture of the family of zeolites which have come to be identified by the code ZSM.

Zeolites are crystalline aluminosilicates which have a uniform crystal structure characterised by a large number of regular small cavities interconnected by a large number of even smaller rectangular channels. It was discovered that, by virtue of this structure consisting of a network of interconnected uniformly sized cavities and channels, crystalline zeolites are able to accept for absorption molecules having sizes below a certain well defined value whilst rejecting molecules of larger size, and for this reason they have come to be known as "molecular sieves". This characteristic structure also gives them catalytic properties, especially for certain types of hydrocarbon conversions.

The ZSM family of zeolites are well known and their preparation and properties have been extensively described. Thus, for example, one type of the ZSM family of zeolites is that known as ZSM-5. This type of crystalline zeolite which has been found to be especially effective as a catalyst for hydrocarbon conversions, is described in United States Patent Specification No. 3,702,886. The ZSM-5 type of crystalline zeolite is characterized by a particular X-ray diffraction pattern and by a particular range of chemical compositions. The characteristic X-ray diffraction pattern is set forth in Table 1 below:—

TABLE 1

| Interplanar spacing d(A) | Relative intensity |
|---|---|
| 11.1±0.3 | S |
| 10.0±0.3 | S |
| 7.4±0.2 | W |
| 7.1±0.2 | W |
| 6.3±0.2 | W |
| 6.04±0.2 | W |
| 5.56±0.1 | W |
| 5.01±0.1 | W |
| 4.60±0.08 | W |
| 4.25±0.08 | W |
| 3.85±0.07 | VS |
| 3.71±0.05 | S |
| 3.04±0.03 | W |
| 2.99±0.02 | W |
| 2.94±0.02 | W |

where d(A) is in Angström units and VS=very strong, S=strong, and W=weak. The chemical composition of a ZSM-5 type of zeolite can be represented, in terms of the molar ratios of oxides, as follows:

$$(0.9\pm0.2)M_{2/n}O:Al_2O_3:10\text{—}200\ SiO_2:zH_2O$$

wherein M is a cation, n is the valency of the cation M, and z ranges from 0 to 40. A particularly useful group of the ZSM-5 type of zeolite are those which can be represented by the following formula:

$$(0.9\pm0.2)\ M_2O:Al_2O_3:10\text{—}200\ SiO_2:zH_2O$$

wherein M is a monovalent cation and z ranges from 0 to 40. The monovalent cation M can be derived, for example, from a quaternary compound or from a mixture of a quaternary compound and an alkali metal. The quaternary compound can be, for example, a quaternary ammonium compound, e.g. a quaternary alkylammonium compound or a quaternary alkylaryl ammonium compound, a quaternary phosphonium compound, a quaternary arsenium compound or a quaternary stibonium compound. When M includes an alkali metal cation the latter is preferably a sodium cation and when M is or includes a quaternary alkylammonium cation or a quaternary alkylarylammonium cation, each of the alkyl groups preferably contains from 2 to 5 carbon atoms.

British Patent Specification No. 1,132,096 describes a method for producing a crystalline zeolitic molecular sieve, which comprises forming an aqueous reactant mixture having an initial overall composition defined in oxide mole ratios as follows:—

$$M_2O/SiO_2=a$$

$$SiO_2/Al_2O_3=b$$

$$H_2O/M_2O=c$$

wherein the values of a, b and c are the essential determinants for the type of crystalline zeolitic molecular sieve desired and M is an alkali metal, thermally treating the mixture at a temperature from 20 to 120°C, until crystals of the molecular sieve form, and separating and recovering the crystals, at least part of the thermal treatment being under at least autogenous pressure and at least a portion of the silicon oxide and aluminium oxide of the reactant mixture being provided by a kaolin-type clay which has been rendered amorphous to X-ray diffraction by an attrition treatment or by calcining at a temperature of from 550° to 850°C, and then conducted with an aqueous mineral acid solution so as to increase the $SiO_2/Al_2O_3$ molar ratio of the clay to from 6 to 270, separated, dried and, when the silica/alumina ratio in the final zeolitic molecular sieve is to be

greater than 3 subsequently fired at a temperature of from 500°C to 825°C for at least one hour.

Zeolites of the ZSM family have a $SiO_2/Al_2O_3$ molar ratio greater than 3. It has now been found unexpectedly that when manufacturing zeolites of the ZSM family by a process in which the molar ratio of $SiO_2/Al_2O_3$ is increased by acid extraction of alumina, it is not necessary (contrary to the teachings of British Patent Specification No. 1,132,096) subsequently to fire the aluminosilicate at a temperature of from 550°C to 825°C for at least one hour.

More particularly, according to the present invention there is provided a method of manufacturing a crystalline zeolite of the ZSM family which method comprises the steps of:

(a) treating at aluminosilicate with a strong acid at a temperature and for a time sufficient to extract at least part of the aluminium oxide content of said aluminosilicate and increase the molar ratio of $SiO_2:Al_2O_3$ in the aluminosilicate to a value not less than 10:1, the aluminosilicate having been obtained by removing from a clay mineral at least part of its chemically bound water,

(b) washing the product of step (a) with water;

(c) mixing the product of step (c) with water and a quaternary compound or with water and a mixture of a quaternary compound and an alkali metal compound, at least a major proportion of the quaternary compound or of the quaternary compound and the alkali metal compound being a hydroxide, in the proportions required to form a zeolite of the ZSM family, and heating the mixture thus formed at an elevated pressure and at an elevated temperature for a time sufficient to form a crystalline zeolite of the ZSM family, and

(d) separating the crystalline zeolite from the reaction mixture in which it is formed; and wherein during the subsequent to the carrying out of step (a) the aluminosilicate is not subjected to temperatures in excess of 200°C.

Advantageously, after the crystalline zeolite prepared by the method of the invention has been separated from the reaction mixture in which it is formed, it is washed and dried.

The aluminosilicate starting material is derived from a clay mineral, preferably a clay mineral of the kandite group, such as a kaolinite, (in which case the molar ratio $SiO_2:Al_2O_3$ is 2:1) or a clay mineral of the smectite group, such as bentonite, (in which case the molar ratio $SiO_2:Al_2O_3$ is 5:1) by removing at least part of the chemically bound water with heat. Conveniently, the aluminosilicate starting material is obtained by heating a clay mineral to a temperature in the range of from 500°C to 1000°C to remove at least part of the chemically bound water. Advantageously the clay mineral is heated at a temperature ranging from 600°C to 950°C for at least 1 hour.

In any event, the heat treatment of the clay mineral should preferably be such that, after heating a dry sample of the heat-treated product for 2 hours at 1000°C, the loss in weight on ignition does not exceed 10%.

In step (a), the acid used preferably has a $pK_a$ value not greater than 2 and most preferably has a $pK_a$ value of less than 0. Suitable acids include hydrochloric acid, sulphuric acid, nitric acid and orthophosphoric acid. The acid should be used at a concentration of at least 2M, preferably at least 5M, and most preferably at least 7M. The optimum acid concentration depends upon the weight ratio of acid solution to dry aluminosilicate and upon the type of acid used and thus the nature of the aluminium salt formed and its solubility in the acid solution. The weight ratio of acid solution to dry aluminosilicate is preferably at least 5:1. The acid treatment is preferably performed at a temperature in the range of from 50°C to 120°C for at least 1 hour, and under conditions such that the molar ratio of $SiO_2:Al_2O_3$ in the acid-treated aluminosilicate is in the range 10—200:1. Usually, after the acid treatment the molar ratio of $SiO_2:Al_2O_3$ in the aluminosilicate is in the range 10—50:1.

In step (b), the acid-treated aluminosilicate is advantageously dried after being washed.

In step (c) the acid-treated, washed and preferably dried aluminosilicate is mixed with the quaternary compound, for example a tetraalkylammonium compound, optionally in admixture with an alkali metal compound, and water in the appropriate proportions to form the desired ZSM zeolite, and the mixture is then heated in a pressure vessel to a temperature which is preferably in the range of from 100°C to 180°C for a period of from about 1 to about 2 days. In order to form a ZSM-5 zeolite at least 70% by weight of the quaternary compound or of the mixture of the quaternary compound and the alkali metal compound should be in the form of the hydroxide.

It has been found that the method of the invention enables a crystalline zeolite of the ZSM-5 type, for example, to be formed from a reaction mixture containing the constituents in appropriate molar proportions at a lower temperature and/or in a shorter time as compared with prior art processes, thus saving energy.

The preparation of a ZSM-5 type zeolite by the method of the invention is illustrated by the following Examples.

Example 1

500 g of an English kaolin, having a particle size distribution such that 0.1% by weight thereof consisted of particles having an equivalent spherical diameter larger than 10 microns and 95% by weight thereof consisted of particles having an equivalent spherical

diameter smaller than 2 microns, was calcined at a temperature of 870°C for 3 hours to form metakaolin. After heating a dry sample of the metakaoline at 1000°C for 2 hours, it was found that on ignition the loss in weight was 0.2%. The calcination yielded 439g. of metakaoline which was allowed to cool, and was then mixed with approximately 2 litres of an 11M concentrated hydrochloric acid solution, giving a weight ratio of acid solution to dry metakaolin of 5.44:1. The mixture was heated to reflux temperature, 112°C, and stirred at this temperature for approximately 2½ hours. The reaction mixture was then cooled and washed with distilled water until free of acid. The mineral residue was dried and the yield of acid-treated metakaolin found to be approximately 220g. The mole ratio $SiO_2$:$Al_2O_3$ was 29:1.

100g. of the acid-treated metakaolin was mixed with 1500 ml of water, 150g. of tetrapropylammonium hydroxide and 10g. of sodium hydroxide. The mixture was heated in a glass-lined autoclave at 150°C for 2 days and then allowed to cool to room temperature. The white product was recovered by filtration, washed and dried, and shown by X-ray analysis to be crystalline zeolite ZSM-5.

A sample of crystalline zeolite ZSM-5 was also prepared by the method described in Example 1 of United States Patent Specification No. 3,702,886. 45.8g. of amorphous silica were partially dissolved in 200 ml. of 2.18N tetrapropylammonium hydroxide by heating to a temperature of about 100°C. There was then added 6.8 g. of sodium aluminate dissolved in 108 ml. of water. The amounts of silica and sodium aluminate were such as to give a molar ratio of $SiO_2/Al_2O_3$ approximately equal to that which obtained in the acid-leached metakaolin prepared as described above. The resultant mixture was placed in an autoclave lined with borosilicate glass and heated at 150°C for five days. The resultant solid product was cooled to room temperature, removed, filtered, washed with water and dried at 110°C.

A sample of the product obtained using the method described in United States Patent Specification No. 3,702,886 was subjected to X-ray analysis and the area of the peak obtained on the recorder chart for the interplanar spacing of 3.85 A was measured. In comparison, the area of the peak for the interplanar spacing of 3.85 A obtained on subjecting to X-ray analysis a sample of the crystalline ZSM-5 prepared in accordance with the method of the invention was found to be 3.6 times greater than the area of the corresponding peak obtained for the crystalline ZSM-5 prepared by the prior art method. This indicates that the yield of pure crystalline ZSM-5 is increased at least threefold by using the method of this invention.

Example 2

A further quantity of the same English kaolin as was used in Example 1 was calcined under identical conditions to yield metakaolin which was found to show a loss of weight of 0.2% on ignition at 1000°C for 2 hours. 500g. samples of this metakaolin were treated with various acid solutions and under different conditions of temperature and reaction time. In each case the weight ratio of acid solution to dry metakaolin was 10:1. The reaction mixture was cooled and washed with distilled water until free of acid.

The mineral residue wsa then dried and the molar ratio of $SiO_2$:$Al_2O_3$ measured. The results obtained as set forth in the Table below:—

| Acid | Molarity | Temp (°C) | Reaction time (hr) | Molar ratio $SiO_2$:$Al_2O_3$ |
|---|---|---|---|---|
| Sulphuric | 3 | 100 | 1 | 60:1 |
| Hydrochloric | 3 | 100 | 1 | 18:1 |
| Hydrochloric | 3 | 100 | 2 | 22:1 |
| Hydrochloric | 9 | 100 | 1 | 34:1 |
| Hydrochloric | 9 | 100 | 3 | 50:1 |
| Hydrochloric | 9 | 112 | 1 | 66:1 |
| Hydrochloric | 9 | 112 | 3 | 200:1 |
| Nitric | 3 | 100 | 1 | 25:1 |
| Nitric | 3 | 100 | 2 | 50:1 |

In each case 100 g of the acid-leached metakaolin was mixed with 1500 ml of water, 150g of tetrapropylammonium and 10g of sodium hydroxide. The mixture was heated in a glass-lined autoclave at 150°C for 2 days and then allowed to cool at room temperature.

The white product was recovered by filtration and dried, and shown by X-ray analysis to be crystalline zeolite ZSM-5.

**Claims**

1. A method of manufacturing a crystalline zeolite of the ZSM family which method is characterised by the steps of:—

(a) treating an aluminosilicate with a strong acid at a temperature and for a time sufficient to extract at least part of the aluminium oxide content of said aluminosilicate and increase the mole ratio of $SiO_2$:$Al_2O_3$ in the aluminosilicate to a value not less than 10:1, the aluminosilicate having been obtained by removing from a clay mineral at least part of its chemically bound water,

(b) washing the product of step (a) with water;

(c) mixing the product of step (b) with water and a quaternary compound or with water and a mixture of a quaternary compound and an alkali metal compound, at least a major proportion of the quaternary compound or of the quaternary compound and the alkali metal compound being a hydroxide, in the proportions required to form a zeolite of the ZSM family and heating the mixture thus formed at an elevated pressure and at an elevated temperature for a time sufficient to form a crystalline zeolite of the ZSM family, and

(d) separating the crystalline zeolite from the reaction mixture in which it is formed, and wherein during and subsequent to the carrying out of step (a) the aluminosilicate is not subjected to temperatures in excess of 200°C.

2. A method according to Claim 1, characterised in that the aluminosilicate has been obtained from a clay mineral of the kandite group or of the smectite group of clay minerals.

3. A method according to Claim 2, characterised in that the aluminosilicate has been obtained by heating the clay mineral at a temperature ranging from 600°C to 950°C for at least 1 hour.

4. A method according to Claim 1, 2 or 3, characterised in that the acid used in step (a) is hydrochloric acid, sulphuric acid, nitric acid or orthophosphoric acid.

5. A method according to Claim 4, characterised in that the acid is used at a concentration of at least 7M.

6. A method according to Claim 4 or 5, characterised in that the aluminosilicate is treated with the strong acid at a temperature in the range of from 50°C to 100°C for at least 1 hour.

7. A method according to any one of Claims 1 to 6, characterised in that the acid-treated aluminosilicate is dried after being washed with water.

8. A method according to any one of Claims 1 to 7, characterised in that the mixture formed in step (c) is heated in a pressure vessel to a temperature in the range of from 100°C to 180°C for a period of from about 1 to about 2 days.

9. A method according to any one of Claims 1 to 8, characterised in that, in step (c), at least 70% by weight of the quaternary compound or of the mixture of the quaternary compound and the alkali metal compound is in the form of the hydroxide.

**Patentanspruche**

1. Ein Verfahren zur Herstellung eines kristallinen Zeoliths der ZSM-Familie, welches Verfahren gekennzeichnet ist durch die Verfahrensschritte:

(a) Behandeln eines Alumosilikats mit einer starken Säure bei ausreichend hoher Temperatur und während ausreichend langer Zeit, um mindestens einen Teil des Aluminiumoxidgehaltes des genannten Alumosilikats zu extrahieren und das molare Verhältnis von $SiO_2$:$Al_2O_3$ in dem Alumosilikat auf einen Wert nicht unter 10:1 zu erhöhen, wobei das Alumosilikat erhalten wurde durch zumindest teilweises Entfernen des chemisch gebundenen Wassers aus einem Tonmineral;

(b) Waschen des in Verfahrensstufe (a) erhaltenen Produktes mit Wasser;

(c) Mischen des Produktes aus Verfahrensstufe (b) mit Wasser und einer quaternären Verbindung oder mit Wasser und einer Mischung aus einer quaternären Verbindung und einer Alkalimetallverbindung, wobei zumindest der größere Anteil der quaternären Verbindung oder quaternären Verbindung und der Alkalimetallverbindung ein Hydroxid ist, in den zur Bildung eines Zeoliths der ZSM-Familie erforderlichen Anteilen, und Erhitzen der so gebildeten Mischung bei erhöhtem Druck und erhöhter Temperatur während einer zur Bildung eines kristallinen Zeoliths der ZSM-Familie ausreichenden Zeit, und

(d) Abtrennen des kristallinen Zeoliths aus der Reaktionsmischung, in welcher er gebildet wurde, und wobei während und im Anschluß an die Durchführung von Verfahrensstufe (a) das Alumosilikat keinen Temperaturen höher als 200°C ausgesetzt wird.

2. Ein Verfahren gemäß Anspruch 1, dadurch gekennzeichnet, daß das Alumosilikat aus einem Tonmineral der Kanditgruppe oder der Gruppe der Seifentone (Smektite) der Tonmineralien gewonnen wurde.

3. Ein Verfahren gemäß Anspruch 2, dadurch gekennzeichnet, daß das Alumosilikat durch mindestens 1-stündiges Erhitzen des Tonminerals auf eine Temperatur im Bereich von 600°C bis 950°C erhalten wurde.

4. Ein verfahren gemäß Anspruch 1, 2 oder 3, dadurch gekennzeichnet, daß die in Verfahrensstufe (a) verwendete Säure Salzsäure, Schwefelsäure, Salpetersäure oder Orthophosphorsäure ist.

5. Ein Verfahren gemäß Anspruch 4, dadurch gekennzeichnet, daß die Säure in einer Konzentration von mindestens 7M verwendet wird.

6. Ein Verfahren gemäß Anspruch 4 oder 5, dadurch gekennzeichnet, daß das Alumosilikat mindestens 1 Stunde lang mit der starken Säure bei einer Temperatur im Bereich von 50°C bis 100°C behandelt wird.

7. Ein Verfahren gemäß irgendeinem der Ansprüche 1 bis 6, dadurch gekennzeichnet, daß das mit Säure behandelte Alumosilikat getrocknet wird, nachdem es mit Wasser gewaschen wurde.

8. Ein Verfahren gemäß irgendeinem der Ansprüche 1 bis 7, dadurch gekennzeichnet, daß die in Stufe (c) gebildete Mischung für eine Zeitdauer von etwa 1 bis 2 Tagen in einem Druckkessel auf eine Temperatur im Bereich von 100°C und 180°C erhitzt wird.

9. Ein verfahren gemäß irgendeinem der Ansprüche 1 bis 8, dadurch gekennzeichnet, daß in Verfahrensstufe (c) mindestens 70 Gewichtsprozent der quaternären Verbindung oder der Mischung aus der quaternären Verbindung und der Alkalimetallverbindung in Form des Hydroxids vorliegen.

**Revendications**

1. Procédé de préparation de zéolite cristalline de la famille ZSM, lequel procédé est caractérisé par les étapes consistant:

(a) à traiter un aluminosilicate avec un acide fort à une température et pendant une durée suffisantes pour extraire au moins une partie de la teneur en oxyde d'aluminium dudit aluminosilicate et augmenter le rapport molaire $SiO_2$:$Al_2O_3$ de l'aluminosilicate à une valeur non inférieure à 10:1, l'aluminosilicate ayant été obtenu en débarrassant une argile d'une partie au moins de son eau liée chimiquement;
(b) à laver le produit de l'étape (a) à l'eau;
(c) à mélanger le produit de l'étape (b) avec de l'eau et un composé quaternaire ou avec de l'eau et un mélange d'un composé quaternaire et d'un composé de métal alcalin, au moins une proportion dominante du composé quaternaire ou du composé quaternaire et du composé de métal alcalin étant un hydroxyde, dans les proportions nécessaires pour former une zéolite de la famille ZSM, et à chauffer le mélange ainsi formé à une pression élevée et à une température élevée pendant une durée suffisante pour former une zéolite cristalline de la famille ZSM, et
(d) à séparer la zéolite cristalline du mélange réactionnel dans lequel elle est formée et, pendant et après la mise en oeuvre de l'étape (a), l'aluminosilicate n'étant pas soumis à des températures supérieures à 200°C.

2. Procédé selon la revendication 1, caractérisé en ce que l'aluminosilicate a été obtenu à partir d'une argile du groupe kandite ou du groupe smectite.

3. Procédé selon la revendication 2, caractérisé en ce que l'aluminosilicate a été obtenu par chauffage de l'argile à une température comprise entre 600°C et 950°C pendant au moins 1 heure.

4. Procédé selon la revendication 1, 2 ou 3, caractérisé en ce que l'acide utilisé dans l'étape (a) est l'acide chlorhydrique, l'acide sulfurique, l'acide nitrique ou l'acide orthophosphorique.

5. Procédé selon la revendication 4, caractérisé en ce que l'acide est utilisé à une concentration d'au moins 7M.

6. Procédé selon la revendication 4 ou 5, caractérisé en ce que l'aluminosilicate est traité avec l'acide fort à une température comprise entre 50°C et 100°C pendant au moins une heure.

7. Procédé selon l'une quelconque des revendications 1 à 6, caractérisé en ce que l'aluminosilicate traité à l'acide est séché après avoir été lavé à l'eau.

8. Procédé selon l'une lequel quelconque des revendications 1 à 7, caractérisé en ce que le mélange formé dans l'étape (c) est chauffé dans un récipient tenant la pression jusqu'à une température comprise entre 100°C et 180°C pendant une période comprise entre environ 1 et environ 2 jours.

9. Procéde selon l'une quelconque des revendications 1 à 8, caractérisé en ce que, dans l'étape (c), au moins 70% en poids du composé quaternaire ou du mélange du composé quaternaire et du composé de métal alcalin sont sous la forme de l'hydroxyde.